# EUROPEAN PATENT APPLICATION

(11) **EP 3 831 702 A1**
(43) Date of publication of application: **09.06.2021**
(21) Application number: 19383074.2
(22) Date of filing: 04.12.2019
(51) Int. Cl.: B62M 7/12, B62M 11/02, B60K 1/02, B60K 17/04, B60L 50/60, B60K 7/00

(54) **ELECTRIC MOTORCYCLE**

(71) Applicant: XIU RDI, S.L., 17243 Llambilles (Girona) (ES)
(72) Inventor: SERRA ROQUETA, Josep, 17243 LLAMBILLES (Girona) (ES)
(74) Representative: Herrero & Asociados, S.L.

(57) **Abstract**

The electric motorcycle comprises a gear (1) which drives one wheel (2) of the motorcycle, said gear (1) being driven by an electric driving unit (10), wherein the electric driving unit (10) comprises a plurality of electric motors (3). Preferably, the electric driving unit (10) comprises a plurality of electric motors (3) that are directly engaged with said gear (1).

The present invention provides an electric motorcycle comprising a driving unit providing the required power because the plurality of electric motors multiple the power provided by each of them. Furthermore, the driving unit is of reduced dimensions and weight and cheaper in comparison with the conventional electric motors used in electric motorcycles.

## Description

The present invention refers to an electric vehicle, in particular, an electric motorcycle.

### Background of the invention

Conventional motorcycles traditionally use internal combustion engines as driving unit, but during the last years motorcycles using electric motors have been developed.

The internal combustion engines have the advantage that provide suitable power with a reduce volume, but they have the drawback that they are a source of pollution, and some of these motorcycles are not permitted to be used in some places, such as the center of great cities due to these pollution problems.

The electric motorcycles comprising an electric driving unit have the advantage that do not generate pollution, but they have the drawback that are expensive and heavy and need a great space for the electric driving unit to produce the required power, which is inconvenient for motorcycles.

The electric driving unit with suitable dimensions do not provide the power suitable for some kind of motorcycles.

There are also known electric motors with reduced dimensions, but they are usually used for electrical household appliances, such as e.g. washing machines, but they are considered not suitable for vehicles because of the power they provide.

### Description of the invention

Therefore, one purpose of the present invention is to provide an electric motorcycle comprising a driving unit providing the required power and, at the same, being of reduced dimensions and weight and cheaper that other equivalent electric motors. With the electric motorcycle according to the present invention it is possible to solve said drawbacks, providing other advantages that are described below.

The electric motorcycle according to the present invention comprises a gear which drives one wheel of the motorcycle, said gear being driven by an electric driving unit, wherein the electric driving unit comprises a plurality of electric motors.

Advantageously, the electric driving unit comprises a plurality of electric motors that are directly or indirectly engaged with said gear.

Advantageously, the electric driving unit comprises a plate or aluminum case on which the electric motors are mounted, said plate defining two faces.

As stated previously, the present invention provides an electric motorcycle comprising a driving unit providing the required power because the plurality of electric motors multiple the power provided by each of them.

Furthermore, the driving unit is of reduced dimensions and weight and cheaper in comparison with the conventional electric motors used in electric motorcycles.

### Brief description of the drawings

For a better understanding the above explanation and for the sole purpose of providing an example, some non-limiting drawings are included that schematically depict a practical embodiment.
Figure 1 is a perspective view of an electric driving unit used in the electric motorcycle of the present invention, according to a first embodiment;
Figure 2 is a cross-section view of the electric driving unit used in the electric motorcycle of the present invention, according to said first embodiment;
Figure 3 is a perspective view of an electric driving unit used in the electric motorcycle of the present invention, according to a second embodiment; and
Figure 4 is a cross-section view of the electric driving unit used in the electric motorcycle of the present invention, according to said second embodiment.

### Description of preferred embodiments

The present invention refers to an electric motorcycle. However, for simplicity reasons the present description of these preferred embodiments is centered in the electric driving unit included in the electric motorcycle according to the present invention, because the rest of components of the motorcycle are conventional.

According to the present invention, the electric driving unit, identified generally by numeral reference 10, is used for driving a gear 1, which also drives a wheel 2 of the motorcycle.

The electric driving unit 10 comprises a plurality of electric motors 3, and at least one is directly engaged with the gear 1 for driving the wheel 2.

The number of electric motors 3 will depend on the desired power to be provided to the motorcycle.

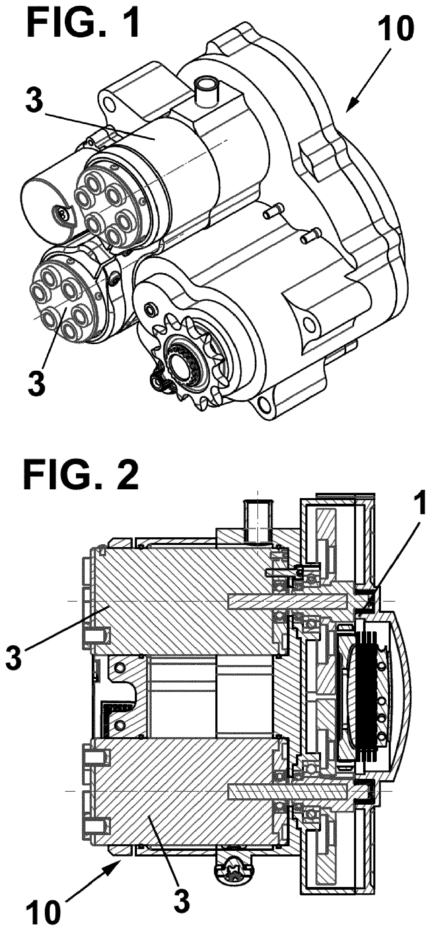

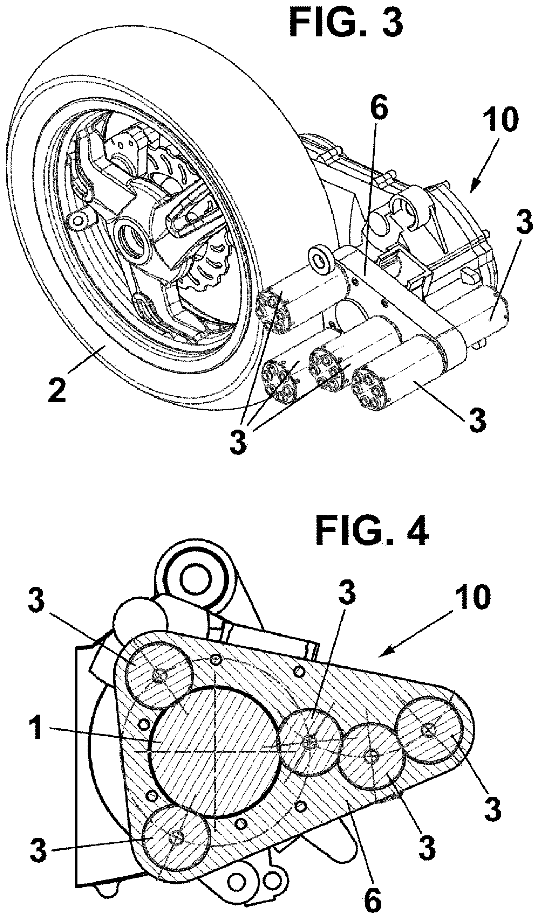

For example, in the first embodiment shown in figures 1 and 2, the number of electric motors 3 is two, and in the second embodiment shown in figures 3 and 4, the number of electric motors 3 is five.

The electric motors 3 can be directly engaged with the gear 1, or the electric motors 3 are engaged with other electric motors 3.

Furthermore, the term "engaged" used in the present description and in the following claims means that the output shaft of the electric motors is engaged with the gear and/or with the output shaft of other electric motors.

As shown in figure 4, according to this second embodiment, the electric driving unit 10 comprises three electric motors 3 engaged directly with the gear 1 and two electric motors 3 engaged to each other and with one electric motor 3 engaged directly with the gear 1.

Furthermore, the electric driving unit 10 comprises a plate 6 on which the electric motors 3, are mounted.

According to the first embodiment, shown in figures 1 and 2, all the electric motors 3 are mounted on the same face or side of the plate 6, but in the second embodiment shown in figures 3 and 4, one of the electric motors 3, is mounted on the other face or side of the plate 6, with respect to the other electric motors 3.

This arrangement of the electric motors permits to use better the available space for the electric driving unit 10.

It must be pointed out that the electric motors used in the motorcycle according to the present invention are conventional electric motors, which are usually used for washing machines, which are discarded by the skilled persons for their use in vehicles due to the low power they provide.

However, the inventor has realized that using a plurality of these electric motors in combination, they can provide the power necessary for a motorcycle, with a reduced cost, volume and weight.

Even though reference has been made to specific embodiments of the invention, it is obvious for a person skilled in the art that the electric motorcycle described herein is susceptible to numerous variations and modifications, and that all of the details mentioned can be substituted for other technically equivalent ones without departing from the scope of protection defined by the attached claims.

## Claims

1. Electric motorcycle, comprising a gear (1) which drives one wheel (2) of the motorcycle, said gear (1) being driven by an electric driving unit (10), **characterized in that** the electric driving unit (10) comprises a plurality of electric motors (3).

2. Electric motorcycle according to claim 1, wherein the electric driving unit (10) comprises a plurality of electric motors (3) that are directly engaged with said gear (1).

3. Electric motorcycle according to claim 1, wherein the electric driving unit (10) comprises at least one electric motor (3) engaged to other electric motor (3).

4. Electric motorcycle according to any one of the previous claims, wherein the electric driving unit (10) comprises a plate (6) on which the electric motors (3) are mounted.

5. Electric motorcycle according to claim 4, wherein said plate (6) defines two faces, and at least one of the electric motors (3) is mounted on an opposite face of the plate (6) with respect to the other electric motors (3).
